# EUROPÄISCHE PATENTSCHRIFT

(11) **EP 2 727 203 B1**
(45) Veröffentlichungstag und Bekanntmachung des Hinweises auf die Patenterteilung: **16.12.2015**
(21) Anmeldenummer: 12728556.7
(22) Anmeldetag: 20.06.2012
(51) Int. Cl.: H02G 3/32

(54) **HALTEEINRICHTUNG ZUM ZUSAMMENFÜHREN VON KABELARTIGEN ELEMENTEN**
RETAINING DEVICE FOR BRINGING TOGETHER CABLE-LIKE ELEMENTS
DISPOSITIF DE RETENUE POUR RÉUNIR DES ÉLÉMENTS DE TYPE CÂBLES

(30) Priorität: 30.06.2011 DE 102011078373
(43) Veröffentlichungstag der Anmeldung: 07.05.2014
(73) Patentinhaber: BSH Hausgeräte GmbH, 81739 München (DE)
(72) Erfinder: GOLAVSEK, Samo, 3312 Prebold (SI); DANIJEL, Roman, 3312 Ljubno (SI); DECMAN, Igor, 3232 Ponikva (SI); SEMEJA, Uros, 3327 Smartno ob Paki (SI)
(86) Internationale Anmeldenummer: PCT/EP2012/061762
(87) Internationale Veröffentlichungsnummer: WO 2013/000775

(56) Entgegenhaltungen:
- WO-A1-01/00919
- FR-A1- 2 948 163
- GB-A- 688 260
- GB-A- 2 432 879

## Beschreibung

Die Erfindung betrifft eine Halteeinrichtung zum Zusammenführen von kabelartigen Elementen nach dem Oberbegriff des Patentanspruchs 1, wobei ein Klemmabschnitt zur Aufnahme der Elemente mit zumindest zwei in eine Schließstellung ausgerichteten Klemmelementen vorgesehen ist.

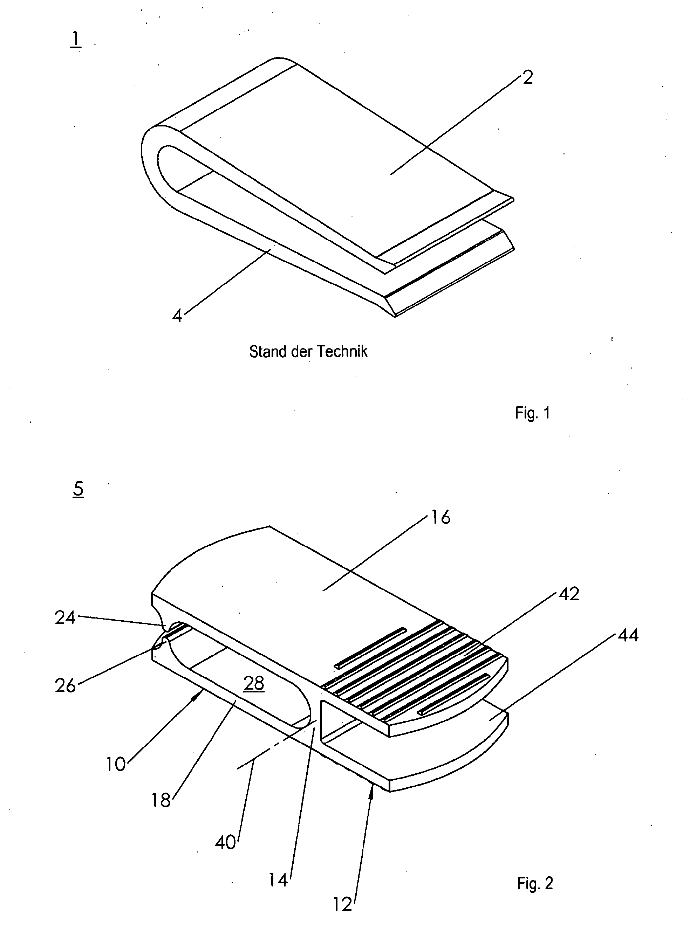

Elektronische Haushaltsgeräte wie Kaffeemaschinen, Wasserkocher, Computer, Fernseher und dergleichen haben regelmäßig ein Stromkabel mit einer definierten Länge. Wenn nicht die gesamte Kabellänge benötigt wird, sondern ein Stromkabel mit einer kürzeren Länge genügen würde, ist es zur Vermeidung von bspw. Knotenbildung vorteilhaft, den freien Kabelabschnitt in Schlaufen zusammenzufassen oder aufzuwickeln. Ebenso ist es vorteilhaft, nebeneinander in Längsrichtung verlaufende Kabel zumindest abschnittsweise zur Vermeidung von Verknotungen zusammenzuführen. Zur Sicherung des freien Leitungsabschnittes bzw. der Kabel wird häufig eine in Figur 1 gezeigte Halteeinrichtung 1 verwendet. Diese hat zwei Klemmelemente 2, 4, die federnd miteinander verbunden sind und in eine Schließstellung vorgespannt sind. Zum Zusammenführen der Kabel wird die Halteeinrichtung 1 mit ihrem Stirnbereich seitlich auf die Kabel aufgeschoben, wodurch die beiden Klemmelemente 2, 4 auseinanderbewegt werden. Problematisch ist jedoch, dass das jeweilige aufzunehmende Kabel zum Öffnen der Halteeinrichtung 1 lagefixiert werden muss, da sonst keine Öffnungskraft zur Überwindung der in Richtung der Schließstellung wirkenden Vorspannkraft aufgebracht werden kann. Die Lagefixierung erfolgt meistens unmittelbar über den Benutzer, dermit seiner einen Hand an der Halteeinrichtung angreift und mit seiner anderen Hand die Kabel lagefiixert, so dass beide Hände zum Zusammenführen der Kabel benötigten werden.

Die Druckschrift FR 2 948 163 A1 offenbart eine Befestigungsvorrichtung zum Fixieren elektrischer oder hydraulischer Kabel an einer festen Struktur eines Flugzeugs. Aus den Druckschriften WO 01/00919 A1 und GB 2 432 879 A ist jeweils eine Klemmeinrichtung bekannt. Die GB 688 260 A offenbart eine Klammer mit zwei Öffnungen für elektrische Kabel.

Aufgabe der Erfindung ist es, eine Halteeinrichtung zum Zusammenführen von kabelartigen Elementen zu schaffen, die die vorgenannten Nachteile beseitigt und insbesondere eine vereinfachte Aufnahme der Kabel ermöglicht.

Diese Aufgabe wird gelöst durch eine Halteeinrichtung mit den Merkmalen des Patentanspruchs 1. Vorteilhafte Aus- und Weiterbildungen, welche einzeln oder in Kombination miteinander ersetzbar sind, sind Gegenstand der jeweils abhängigen Ansprüche.

Eine erfindungsgemäße Halteeinrichtung zum Zusammenführen von kabelartigen Elementen hat einen Klemmabschnitt zur Aufnahme der Elemente, der zumindest zwei in Schließstellung ausgerichtete Klemmelemente aufweist. Erfindungsgemäß ist ein Betätigungsabschnitt zum Überführen der Klemmelemente in eine Öffnungsstellung vorgesehen, der zum Klemmabschnitt jenseits einer Schwenkachse angeordnet ist.

Durch den Betätigungsabschnitt kann der Klemmabschnitt jederzeit geöffnet werden. Es wird eine Öffnungskraft nicht mehr durch ein seitliches Aufschieben der Halteeinrichtung auf die kabelartigen Elemente bzw. Kabel, Leitungen und drgl. aufgebracht, sondern unabhängig von der Position und Lage der zusammenzuführenden Kabel. Die Kabel können somit frei beweglich sein. Eine Lagefixierung der kabelartigen Elemente ist nicht notwendig, so dass nur eine Hand zum Zusammenführen der Kabel benötigt wird und der Benutzer eine freie Hand hat. Dabei wird durch die Anordnung des Betätigungsabschnitts zum Klemmabschnitt jenseits der Schwenkachse eine wippenartige Anordnung geschaffen, wodurch der Klemmabschnitt mit einem geringen Kraftaufwand geöffnet werden kann, gleichzeitig jedoch eine sichere Schließstellung des Klemmabschnitts gewährleistet ist.

Bei einem bevorzugten Ausführungsbeispiel verläuft die Schwenkachse durch einen die Klemmelemente miteinander verbindenden elastischen Verbindungsabschnitt. Hierdurch ist der Klemmabschnitt integral als ein Bauelement ausgeführt, was wesentlich die Herstellung der Halteeinrichtung vereinfacht, da die Anzahl der zu montierenden Komponenten reduziert wird und eine Montage der Klemmelemente zum Klemmabschnitt entfällt.

Zur weiteren Reduzierung der Komponentenanzahl kann der Verbindungsabschnitt eine Schließkraft zum Überführen der Klemmelemente aus der Öffnungsstellung in die Schließstellung aufbringen. Hierdurch kann auf eine separate Schließfeder verzichtet werden.

Erfindungsgemäß hat der Betätigungsabschnitt zwei Betätigungselemente, die als über die Schwenkachse hinausgehenden Verlängerungen der Klemmelemente ausgebildet sind. Bei dieser Variante ist die Halteeinrichtung als ein einziges integrales Bauteil ausgebildet und kann bequem als ein Kunststoffteil in einem Spritzgussverfahren hergestellt werden.

Zum vereinfachten Greifen der Kabel kann zumindest ein Klemmelement im Stirnbereich einen sich von einer Klemmfläche erstreckenden Vorsprung aufweisen. Zudem werden durch den zumindest einen Vorsprung die Kabel in dem geschlossenen Klemmabschnitt gegen ein Herausfallen gesichert, insbesondere dann, wenn die Kabel einen Durchmesser haben, der kleiner ist als ein gegenseitiger Abstand der Klemmflächen in der Schließstellung ist.

Um eine Beschädigung der Kabel im zusammengeführten Zustand zu verhindern, ist es vorteilhaft, wenn ein von dem elastischen Körperabschnitt und dem zumindest einen Vorsprung begrenzter Aufnahmeraum seitlich geöffnet ist.

Die Erfindung eignet sich insbesondere zum Zusammenführen von Kabeln von elektronischen Geräten im häuslichen Gebrauch, wie Wasserkocher, Fernseher, Computer und dergleichen zur Vermeidung einer Kabelbeschädigung aufgrund von bspw. Verknotungen.

Sonstige vorteilhafte Ausführungsbeispiele der Erfindung sind Gegenstand weiterer Unteransprüche.

Im Folgenden wird ein bevorzugtes Ausführungsbeispiel der Erfindung anhand schematischer Darstellungen näher erläutert. Es zeigen:
- Figur 1: eine bekannte Halteeinrichtung zum Zusammenführen von Kabeln,
- Figur 2: eine perspektivische Darstellung einer erfindungsgemäßen Halteeinrichtung in Schließstellung,
- Figur 3: eine Seitenansicht in Kabellängsrichtung der erfindungsgemäßen Halteeinrichtung,
- Figur 4: eine perspektivische Darstellung der erfindungsgemäßen Halteeinrichtung in Öffnungsstellung, und
- Figur 5: eine perspektivische Darstellung der Halteeinrichtung mit zusammengeführten Kabeln.

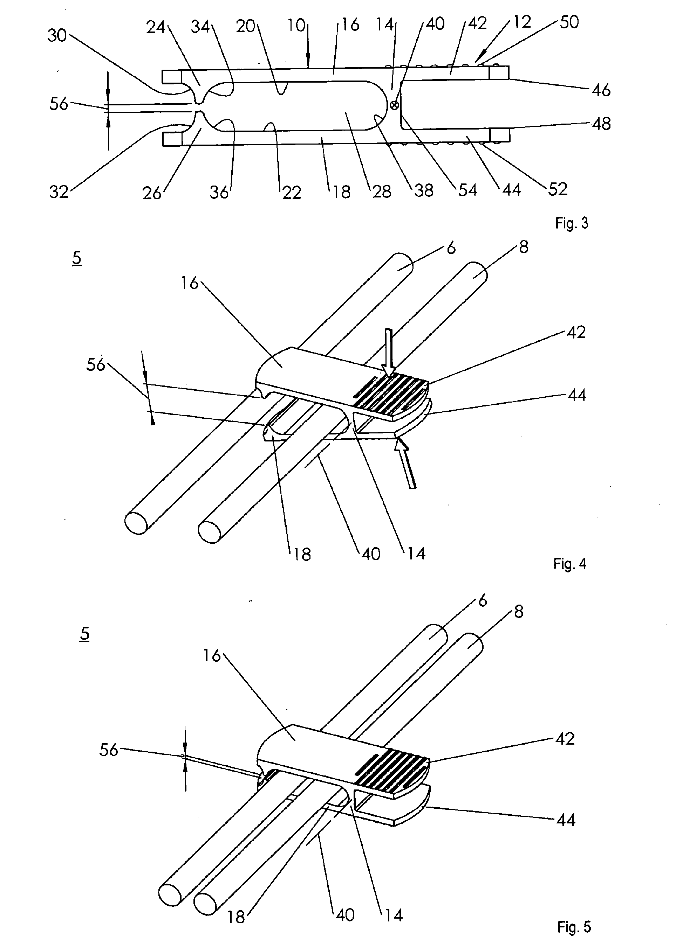

Eine in den Figuren 2 und 3 gezeigte erfindungsgemäße Halteeinrichtung 5 zum Zusammenführen von nebeneinander angeordneten Kabeln bzw. Kabelabschnitten 6, 8 (s. Figur 4) ist als ein wippenartiges, einstückiges Kunststoffspritzgussteil ausgebildet. Sie hat einen Klemmabschnitt 10 zur Aufnahme der Kabel 6, 8, einen Betätigungsabschnitt 12 zur Überführung des Klemmabschnitts 10 in eine Öffnungsstellung und einen Verbindungsabschnitt 14 zur Ausbildung der wippenartigen Gestalt.

Der Klemmabschnitt 10 weist zwei plattenartige voneinander beabstandete Klemmelemente 16, 18 auf, die über den Verbindungsabschnitt 14 federnd miteinander verbunden sind und im Maulbereich vorzugsweise formstabil sind. Die Klemmelemente 16, 18 sind in Schließstellung ausgerichtet und weisen zwei ebene Klemmflächen 20, 22 auf, die in der Schließstellung parallel zueinander verlaufen. Zum Greifen der Kabel 6, 8 haben sie in ihrem von dem Verbindungskörper 14 entfernt liegenden Stirnbereich jeweils einen nach innen gerichteten Vorsprung 24, 26.

Die Vorsprünge 24, 26 sind dreieckig ausgebildet und einander zugewandt. Sie bilden jeweils einen integralen Abschnitt der Klemmelemente 16, 18 und haben jeweils eine von einem Aufnahmeraum 28 abgewandte konkave Stirnfläche 30, 32. Zudem haben die Vorsprünge 24, 26 jeweils eine dem Aufnahmeraum 28 zugewandte konkave Rückfläche 34, 36, die jeweils bündig in die jeweilige Klemmfläche 20, 22 übergeht.

Der Aufnahmeraum 28 wird von einer bogenförmigen Begrenzungsfläche 38 des Verbindungskörpers 14, den Klemmflächen 20, 22 sowie den Rückflächen 34, 36 begrenzt. Seitlich, d.h. in Querrichtung der Haltereinrichtung 5, und somit bei aufgenommen Kabeln 6, 8 in Kabellängsrichtung ist der Aufnahmeraum 28 geöffnet.

Der Betätigungsabschnitt 12 hat zwei zum Klemmabschnitt 10 jenseits einer Schwenkachse 40 angeordnete plattenartige formstabile Betätigungselemente 42, 44, die als integrale Verlängerungen der Klemmelemente 16, 18 ausgebildet sind. Die Betätigungselemente 42, 44 sind voneinander beabstandet und begrenzen durch ein aufeinander Auflaufen ihrer freien Hinterkanten 46, 48 einen maximalen Öffnungswinkel des Klemmabschnitts 10. An ihren voneinander abgewandten äußeren Griffflächen sind sie mit jeweils einer Riffelung 50, 52 zur rutschfesten Betätigung versehen.

Der Verbindungsabschnitt 14 definiert die sich in Querrichtung der Halteeinrichtung 5 erstreckende Schwenkachse 40 und ist stegartig ausgebildet. Er ist elastisch verformbar und definiert hierdurch eine Schließkraft zum Halten und zum Überführen der Klemmelemente 16, 18 aus der Öffnungsstellung in die Schließstellung. Er weist die dem Aufnahmeraum 28 zugewandte konkave Begrenzungsfläche 38 und eine entgegengesetzte ebene Freifläche 54 auf.

Im Folgenden wird ein bevorzugtes Verfahren zum Zusammenführen bzw. zur Aufnahme von nebeneinander laufenden Kabeln 6, 8 beschrieben: Die Halterichtung 5 befindet sich in der in den Figuren 2 und 3 gezeigten Schließstellung. Die Vorsprünge 24, 26 sind über einen engen Spalt 56 voneinander beabstandet und der Klemmabschnitt 10 ist geschlossen. Selbstverständlich können die Vorsprünge auch eine derartige Erstreckung haben, dass sie kopf- bzw. spitzenseitig aneinander anliegen und der Spalt 56 geschlossen bzw. nicht existent ist. Der Aufnahmeraum 28 ist in Längsrichtung der Haltereinrichtung 5 und somit in Kabelquerrichtung geschlossen. Der Verbindungsabschnitt 14 ist nicht verformt und somit spannungsfrei.

Zum Zusammenführen von Kabeln 6, 8 wird wie in Figur 4 durch die Pfeile gezeigt der Klemmabschnitt 10 durch ein Zusammendrücken der Betätigungselemente 40, 42 in eine Öffnungsstellung überführt. Es wird eine Öffnungskraft aufgebracht, die eine elastische Verfomung des Verbindungsabschnitts 14 bewirkt. Die Klemmelemente 16, 18 werden um die Schwenkachse 40 verschwenkt, der Spalt 56 wird vergrößert und der Klemmabschnitt 10 öffnet sich.

Nach der Aufnahme der Kabel 6, 8 wird die Öffnungskraft reduziert. Die Betätigungselemente 30, 32 werden entlastet und der Verbindungsabschnitt 14 entspannt sich selbsttätig. Die Klemmelemente 16, 18 werden mit einer vom Verbindungsabschnitt 14 erzeugten Schließkraft beaufschlagt und aufeinander zubewegt. Der Spalt 56 verengt sich und der Klemmabschnitt 10 schließt sich. Die Kabel 6, 8 sind nun wie in Figur 5 gezeigt sicher in der Halteeinrichtung 5 zusammengeführt, wobei durch den in Kabellängsrichtung geöffneten Aufnahmeraum 28 eine Beschädigung der Kabel 6, 8 verhindert wird.

Offenbart ist eine Halteeinrichtung zum Zusammenführen von kabelartigen Elementen, mit einem Klemmabschnitt zur Aufnahme der Elemente, der zumindest zwei in Schließstellung ausgerichtete Klemmelemente aufweist, wobei ein Betätigungsabschnitt zum Überführen der Klemmelemente in eine Öffnungsstellung vorgesehen ist, der zum Klemmabschnitt jenseits einer Schwenkachse angeordnet ist.

Die Halteeinrichtung eignet sich insbesondere für elektromotorisch angetriebenen Handküchengeräte mit einem Stromkabel, das als kabelartiges Element vorteilhaft von der Halteeinrichtung gehaltert werden kann.

### Bezugszeichenliste

- 1: Halteeinrichtung
- 2: Klemmabschnitt
- 4: Klemmelemente
- 5: Halteeinrichtung
- 6: Kabel
- 8: Kabel
- 10: Klemmabschnitt
- 12: Betätigungsabschnitt
- 14: Verbindungsabschnitt
- 16: Klemmelement
- 18: Klemmelement
- 20: Klemmfläche
- 22: Klemmfläche
- 24: Vorsprung
- 26: Vorsprung
- 28: Aufnahmeraum
- 30: Stirnfläche
- 32: Stirnfläche
- 34: Rückfläche
- 36: Rückfläche
- 38: Begrenzungsfläche
- 40: Schwenkachse
- 42: Betätigungselement
- 44: Betätigungselement
- 46: Hinterkante
- 48: Hinterkante
- 50: Riffelung
- 52: Riffelung
- 54: Freifläche
- 56: Spalt

## Patentansprüche

1. Handküchengerät mit einer Halteeinrichtung (5) zum Zusammenführen von kabelartigen Elementen (6, 8), mit einem Klemmabschnitt (10) zur Aufnahme der Elemente (6, 8), der zumindest zwei in Schließstellung ausgerichtete Klemmelemente (16, 18) aufweist, wobei ein Betätigungsabschnitt (12) zum Überführen der Klemmelemente (16, 18) in eine Öffnungsstellung vorgesehen ist, der zum Klemmabschnitt (10) jenseits einer Schwenkachse (40) angeordnet ist, wobei das Handküchengerät ein Stromkabel (6,8) zur Spannungsversorgung aufweist, und wobei die Halteeinrichtung (5) ausgebildet ist, um das Stromkabel (6,8) aufzunehmen,
wobei die Anordnung des Betätigungsabschnitts (12) zum Klemmabschnitt (10) jenseits der Schwenkachse (40) als eine wippenartige Anordnung ausgebildet ist,
und wobei die Schwenkachse (40) durch einen die Klemmelemente (16, 18) miteinander verbindenden Verbindungsabschnitt (14) verläuft,
wobei der Betätigungsabschnitt (12) zwei formstabile Betätigungselemente (42, 44) hat, die als über die Schwenkachse (40) hinausgehende Verlängerungen der Klemmelemente (16,18) ausgebildet sind,
**dadurch gekennzeichnet, dass**
die Klemmelemente (16, 18) und die formstabilen Betätigungselemente (42, 44) plattenartig ausgebildet sind.

2. Handküchengerät mit einer Halteeinrichtung nach Anspruch 1, wobei die Schwenkachse (40) durch einen die Klemmelemente (16, 18) miteinander verbindenden elastischen Körperabschnitt (14) verläuft.

3. Handküchengerät mit einer Halteeinrichtung nach Anspruch 2, wobei der Körperabschnitt (14) eine Schließkraft zum Überführen der Klemmelemente (16, 18) aus der Öffnungsstellung in die Schließstellung aufbringt.

4. Handküchengerät mit einer Halteeinrichtung nach einem der vorhergehenden Ansprüche, wobei zumindest ein Klemmelement (16, 18) im Stirnbereich einen sich von einer Klemmfläche (20, 22) erstreckenden Vorsprung (24, 26) aufweist.

5. Handküchengerät mit einer Halteeinrichtung nach Anspruch 4, wobei ein Aufnahmeraum (28) von dem elastischen Körperabschnitt (14) und dem zumindest einen Vorsprung (24, 26) begrenzt ist, der seitlich geöffnet ist.

## Claims

1. Handheld kitchen appliance with a retaining device (5) for bringing together cable-like elements (6, 8), having a clamping section (10) for receiving the elements (6, 8), which clamping section (10) has at least two clamping elements (16, 18) aligned in the closed position, wherein an actuation section (12) is provided for transferring the clamping elements (16, 18) into an open position, which actuation section (12) is disposed on either side of a pivot axis (40) in relation to the clamping section (10), wherein the handheld kitchen appliance has a power cable (6, 8) for power supply, and wherein the retaining device (5) is embodied to receive the power cable (6, 8),
wherein the arrangement of the actuation section (12) in relation to the clamping section (10) is embodied on either side of the pivot axis (40) as a rocker-like arrangement,
and wherein the pivot axis (40) runs through a connecting section (14) connecting the clamping elements (16, 18) to each other,
wherein the actuation section (12) has two actuation elements (42, 44) with stable form, which are embodied as extensions of the clamping elements (16, 18) extending beyond the pivot axis (40),
**characterised in that**
the clamping elements (16, 18) and the actuation elements (42, 44) with stable form are embodied in a plate-like manner.

2. Handheld kitchen appliance with a retaining device according to claim 1, wherein the pivot axis (40) runs through a resilient body section (14) connecting the clamping elements (16, 18) to each other.

3. Handheld kitchen appliance with a retaining device according to claim 2, wherein the body section (14) applies a closing force to transfer the clamping elements (16, 18) from the open position into the closed position.

4. Handheld kitchen appliance with a retaining device according to one of the preceding claims, wherein at least one clamping element (16, 18) has a projection (24, 26) extending from a clamping surface (20, 22) in the front region.

5. Handheld kitchen appliance with a retaining device according to claim 4, wherein a holding space (28) is delimited by the resilient body section (14) and the at least one projection (24, 26) which is open to the side.

## Revendications

1. Appareil de cuisine à main comprenant un dispositif de maintien (5) destiné à regrouper des éléments (6, 8) en forme de câble à l'aide d'une section de serrage (10) pour le logement des éléments (6, 8), laquelle section de serrage présente au moins deux éléments de serrage (16, 18) orientés en position de fermeture, une section d'actionnement (12) étant ménagée pour amener les éléments de serrage (16, 18) dans une position d'ouverture, laquelle section d'actionnement est disposée en direction de la section de serrage (10) au-delà d'un axe de pivotement (40), l'appareil de cuisine à main présentant un cordon d'alimentation (6, 8) pour l'alimentation en tension, et le dispositif de maintien (5) étant réalisé pour loger le cordon d'alimentation (6, 8),
la disposition de la section d'actionnement (12) en direction de la section de serrage (10) au-delà de l'axe de pivotement (40) étant réalisée comme une disposition semblable à une bascule,
et l'axe de pivotement (40) s'étendant à travers une section de liaison (14) reliant entre eux les éléments de serrage (16, 18),
la section d'actionnement (12) possédant deux éléments d'actionnement indéformables (42, 44) qui sont réalisés comme des prolongements des éléments de serrage (16, 18), dépassant au-delà de l'axe de pivotement (40),
**caractérisé en ce que**
les éléments de serrage (16, 18) et les éléments d'actionnement indéformables (42, 44) sont réalisés en forme de plaque.

2. Appareil de cuisine à main comprenant un dispositif de maintien selon la revendication 1, l'axe de pivotement (40) s'étendant à travers une section de corps élastique (14) reliant entre eux les éléments de serrage (16, 18).

3. Appareil de cuisine à main comprenant un dispositif de maintien selon la revendication 2, la section de corps (14) appliquant une force de fermeture pour faire passer les éléments de serrage (16, 18) de la position d'ouverture en position de fermeture.

4. Appareil de cuisine à main comprenant un dispositif de maintien selon l'une quelconque des revendications précédentes, au moins un élément de serrage (16, 18) présentant dans la partie frontale une saillie (24, 26) s'étendant à partir d'une surface de serrage (20, 22).

5. Appareil de cuisine à main comprenant un dispositif de maintien selon la revendication 4, un espace de logement (28) étant délimité par la section de corps élastique (14) et l'au moins une saillie (24, 26), lequel est ouvert latéralement.
